# EUROPÄISCHE PATENTANMELDUNG

(11) **EP 1 158 229 A2**
(43) Veröffentlichungstag der Anmeldung: **28.11.2001**
(21) Anmeldenummer: 01112192.8
(22) Anmeldetag: 18.05.2001
(51) Int. Cl.: F16K 24/04

(54) **Vorrichtung zum Anordnen zumindest eines Fluidsteuerventiles**

(30) Priorität: 26.05.2000 DE 10026086
(71) Anmelder: AUDI AG, 85045 Ingolstadt (DE)
(72) Erfinder: Leitner, Peter, 85080 Gaimersheim (DE)

(57) **Zusammenfassung**

Die Erfindung betrifft eine Vorrichtung zum Anordnen zumindest eines Fluidsteuerventiles (10) mit einem Gehäuse (30) und mehreren, davon abgehenden, Fluidanschlüssen (22,24), insbesondere bei einem Entlüftungsventil für ein Zylinderkurbelgehäuse einer Hubkolben-Brennkraftmaschine, wobei zur Erzielung einer schnellen und fehlerfreien Montage die Fluidanschlüsse (22,24) an einem Montagegehäuse (16) angeordnet sind, in das das Fluidsteuerventil (10) über dichtende Verbindungen einsetzbar ist.

## Beschreibung

Die Erfindung betrifft eine Vorrichtung zum Anordnen zumindest eines Fluidsteuerventiles mit einem Gehäuse und mehreren, davon abgehenden Fluidanschlüssen, gemäß dem Oberbegriff des Patentanspruches 1.

Derartige Fluidsteuerventile können beispielsweise ein Entlüftungsventil für die Zylinderkurbelgehäuseentlüftung an einer Hubkolben-Brennkraftmaschine, ein Entlüftungsventil oder Durchsatz-Steuerventil für eine Entlüftungsvorrichtung eines Kraftstoffbehälter eines Kraftfahrzeuges und/oder elektromagnetische Wegeventile z. B. für Automatikgetriebe sein. Aufgrund der sich zunehmend verschärfenden Emissionsvorschriften zum Schutz der Umwelt werden beispielsweise in Kraftfahrzeugen derartige Steuerventile verbaut, wobei zur Vermeidung von Undichtigkeiten oder zur Vermeidung von Fehlanschlüssen (vertauschte Leitungen, Undichtigkeiten) eine hohe Sorgfalt aufzuwenden ist. Sind an derartigen Fluidsteuerventilen im späteren Betrieb des Kraftfahrzeuges Reparaturen auszuführen, so muss sichergestellt sein, dass auch hier keine Fehlmontagen auftreten können.

Aufgabe der Erfindung ist es, eine Vorrichtung zum Anordnen zumindest eines Fluidsteuerventiles vorzuschlagen, die insbesondere im Reparaturbetrieb eine zuverlässige und schnelle Montage des Fluidsteuerventiles ermöglicht.

Diese Aufgabe wird erfindungsgemäß mit den kennzeichnenden Merkmalen des Patentanspruches 1 gelöst. Vorteilhafte und zweckmäßige Weiterbildungen der Erfindung sind den weiteren Patentansprüchen entnehmbar.

Erfindungsgemäß wird vorgeschlagen, dass an sich komplette Fluidsteuerventil mit seinem Gehäuse und den Anschlüssen in einem Montagegehäuse anzuordnen, welches bei Überprüfungen oder Reparaturen an dem Fluidsteuerventil nicht von den eigentlichen Verbindungsanschlüssen beispielsweise mit der Brennkraftmaschine, mit einem Kraftstoffbehälter oder einem automatischen Getriebe gelöst werden muss. Insbesondere wenn das Fluidsteuerventil von den Verbindungen mit dem Montagegehäuse so ausgebildet ist, dass nur eine Einbaulage bzw. Anordnung möglich ist, werden Fehler wie beispielsweise das Vertauschen von Leitungen etc. zuverlässig ausgeschlossen. Das vormontierte Montagegehäuse kann mit absolut zuverlässigen, haltbaren Anschlussverbindungen - z. B. bei Schläuchen mit nichtlösbaren Schlauchbindern oder gesicherten Schraubenverbindungen - vormontiert sein. Das Fluidsteuerventil hingegen kann bevorzugt mit Steckverbindungen in das Montagegehäuse schnell und sicher einsetzbar ausgebildet sein.

Falls das Fluidsteuerventil auch elektrische Anschlüsse aufweist, können auch diese im Montagegehäuse in Form eines Steckersockels angeordnet sein, so dass auch vertauschsichere elektrische Verbindungen herstellbar sind.

Das Montagegehäuse kann im fertigungstechnisch kostengünstiger Weise aus Kunststoff, z. B. im Kunststoff-Spritzverfahren, hergestellt sein.

Ferner kann das Montagegehäuse unmittelbar in einem Bauteil der Brennkraftmaschine ausgebildet sein, z. B. in der Zylinderkopfhaube (Ventildeckel), im Saugrohr oder bei V-Brennkraftmaschinen in einem im V-Raum ausgebildeten Deckel. Der Vorteil einer solchen Integration ist auch, dass ggf. Fluidanschlüsse direkt in diesem Bauteil ausgebildet, eingeformt oder durch diese gebildet sein können.

Ein Ausführungsbeispiel der Erfindung ist im folgenden mit weiteren Einzelheiten näher erläutert. Die schematische Zeichnung zeigt einen Mittellängsschnitt durch ein Entlüftungsventil als Fluidsteuerventil für die Zylinderkurbelgehäuseentlüftung einer Hubkolben-Brennkraftmaschine, insbesondere für ein Kraftfahrzeug, das in ein becherförmiges Montagegehäuse einsetzbar ist.

Mit 10 ist ein nicht näher dargestelltes Fluidsteuerventil bezeichnet, das im vorliegendem Falle ein Entlüftungsventil für ein Zylinderkurbelgehäuse einer Hubkolben-Brennkraftmaschine ist, welches den Durchfluss an Verbrennungsgasen (Blow-By-Gase) abhängig vom Saugrohrunterdruck der Brennkraftmaschine steuert. Das Entlüftungsventil 10 - dessen innerer Aufbau nicht Gegenstand der vorliegenden Erfindung und deshalb auch nicht beschrieben ist - ist über Schläuche 12,14 an das Zylinderkurbelgehäuse einerseits und an das Saugrohr der Brennkraftmaschine andererseits angeschlossen.

Die Schläuche 12,14 sind dazu an einem becherförmigen Montagegehäuse 16 mit einer etwa kreiszylindrischen Umfangswand 18 und einem Boden 20 an dort angeformten rohrförmigen Fluid- bzw. Schlauchanschlüssen 22,24 über Schlauchbinder 26 befestigt. Ferner ist an das Montagegehäuse 16 eine Konsole 28 angeformt, die zur Befestigung mittels Schrauben z. B. am Gehäuse der Brennkraftmaschine (nicht dargestellt) dient.

Desgleichen sind an das etwa zylindrische Gehäuse 30 des Entlüftungsventiles 10 Steckverbindungen in Form von rohrförmigen Anschlussstutzen 32,34 angeformt, die in die Fluidanschlüsse 22,24 einsteckbar sind, wobei Dichtringe 36 eine fluiddichte Verbindung sicherstellen.

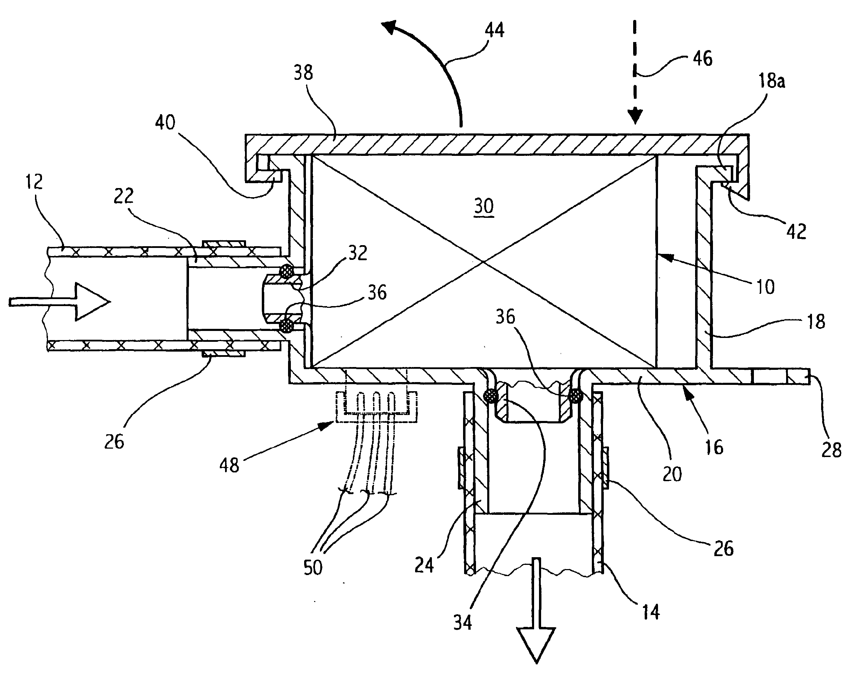

Das Montagegehäuse 16 weist ferner einen Deckel 38 auf, der das auf der Zeichnung nach oben offene Montagegehäuse 16 abdeckt, wobei der Deckel 38 den radial auslaufenden Randbereich 18a der Umfangswand 18 mittels zumindest einer Haltenase 40 umgreift und mittels zumindest einer Rastnase 42 aufklipsbar umschließt. Bevorzugt sind zwei Haltenasen 40 und zwei Rastnasen 42 vorgesehen, die über den Umfang des kreisscheibenförmigen Deckels 38 entsprechend verteilt sind.

Soll das Fluidsteuerventil bzw. Entlüftungsventil 10 gewechselt werden, so ist kein Schlauchanschluss zu lösen. Es ist lediglich der Deckel 38 abzunehmen und das Entlüftungsventil 10 in Richtung des eingezeichneten Pfeiles 44 herauszukippen. Dabei gleiten die Steckverbindungen bzw. Anschlussstutzen 34 und dann 32 des Gehäuses 30 des Entlüftungsventiles 10 aus den korrespondierenden Fluidanschlüssen 22,24.

Umgekehrt wird bei der Montage z. B. eines neuen Entlüftungsventiles 10 dieses in umgekehrter Richtung in das Montagegehäuse 16 hineingekippt, wobei zuerst der Anschlussstutzen 32 in den Fluidanschluss 22 eingefädelt und dann auch der Anschlussstutzen 34 mit dem Fluidanschluss 24 in Überdeckung gebracht und schließlich eingesteckt wird. Danach wird der Deckel 38 montiert und damit der Montagevorgang abgeschlossen.

Die Erfindung ist nicht auf das dargestellte Ausführungsbeispiel beschränkt. Insbesondere können die Anschlussstutzen 32,34 am Gehäuse 30 des Entlüftungsventiles 10 oder eines anderen Ventiles auch parallel zueinander z. B. am Boden 20 angeordnet sein, so dass dann das Entlüftungsventil 10 achsparallel (vgl. gestrichelt eingezeichneter Pfeil 46) einsteckbar wäre. Anstelle der zwei beschriebenen Fluidanschlüsse 22,24 können auch weitere Fluidanschlüsse vorgesehen sein.

Ferner könnte in dem Montagegehäuse 16 im Falle z. B. eines elektromagnetisch betätigten Fluidsteuerventiles zusätzlich eine elektrische Steckverbindung 48 mit entsprechend angeschlossenen elektrischen Leitungen 50 vorgesehen sein, die direkt mit entsprechend ausgebildeten elektrischen Steckern am Fluidsteuerventil korrespondieren. Dementsprechend könnte bei der Montage des Fluidsteuerventiles 10 zugleich auch eine elektrische Verbindung hergestellt werden.

Ferner könnte das Montagegehäuse 16 unmittelbar in ein Bauteil einer Brennkraftmaschine integriert sein; z. B. in eine Zylinderkopfhaube, wobei dann ggf. Schlauchanschlüsse durch eingeformte Kanäle in dieses Bauteil ersetzt werden könnten.

## Patentansprüche

1. Vorrichtung zum Anordnen zumindest eines Fluidsteuerventiles mit einem Gehäuse und mehreren, davon abgehenden Fluidanschlüssen, insbesondere Entlüftungsventil für ein Zylinderkurbelgehäuse einer Hubkolben-Brennkraftmaschine, **dadurch gekennzeichnet, dass** die Fluidanschlüsse (22,24) an einem Montagegehäuse (16) angeordnet sind, in das das Fluidsteuerventil (10) über dichtende Verbindungen (32,34) einsetzbar ist.

2. Vorrichtung nach Anspruch 1, **dadurch gekennzeichnet, dass** die Fluidanschlüsse (22,24) und die Verbindung (32,34) geometrisch so ausgebildet sind, dass das Fluidsteuerventil (10) nur in einer einzigen Einbaulage einsetzbar ist.

3. Vorrichtung nach Anspruch 1 oder 2, **dadurch gekennzeichnet, dass** die Verbindungen (32,34) Steckverbindungen sind.

4. Vorrichtung nach einem oder mehreren der Ansprüche 1 bis 3, **dadurch gekennzeichnet, dass** auch elektrische Verbindungen (48) zwischen dem Montagegehäuse (16) und dem Fluidsteuerventil (10) vorgesehen sind.

5. Vorrichtung nach einem oder mehreren der Ansprüche 1 bis 4, **dadurch gekennzeichnet, dass** das Montagegehäuse (16) mit stutzenförmigen Fluidanschlüssen (22,24) versehen ist und dass das Gehäuse (30) des Fluidsteuerventiles (10) ebenfalls Anschlussstutzen (32,34) aufweist, die dichtend von einer offenen Seite des Montagegehäuses aus in die Fluidanschlüsse (22,24) einsteckbar sind.

6. Vorrichtung nach Anspruch 5, **dadurch gekennzeichnet, dass** zwischen den Anschlussstutzen (32,34) am Gehäuse (30) des Fluidsteuerventiles (10) und den stutzenförmigen Fluidanschlüssen (22,24) des Montagegehäuses (16) Dichtringe (36) vorgesehen sind.

7. Vorrichtung nach einem oder mehreren der Ansprüche 1 bis 6, **dadurch gekennzeichnet, dass** das Fluidsteuerventil (10) in eine Öffnung des becherförmigen Montagegehäuses (16) einsetzbar ist und in diesem kraft- und/oder formschlüssig gehalten ist.

8. Vorrichtung nach Anspruch 7, **dadurch gekennzeichnet, dass** das Montagegehäuse (16) mittels eines aufklipsbaren Deckels (18) verschließbar ist.

9. Vorrichtung nach einem oder mehreren der Ansprüche 1 bis 8, **dadurch gekennzeichnet, dass** das Montagegehäuse (16) und/oder das Gehäuse (30) des Fluidsteuerventiles (10) aus Kunststoff gefertigt ist.

10. Vorrichtung nach einem oder mehreren der Ansprüche 1 bis 9, **dadurch gekennzeichnet, dass** das Montagegehäuse (16) unmittelbar in einem Bauteil der Brennkraftmaschine ausgebildet ist.
